# EUROPEAN PATENT APPLICATION

(11) **EP 4 560 855 A1**
(43) Date of publication of application: **28.05.2025**
(21) Application number: 23307021.8
(22) Date of filing: 21.11.2023
(51) Int. Cl.: H02G 1/14, H01B 7/14, H01B 7/22, H02G 15/08, H02G 15/18

(54) **A SUBSEA ARMOURED POWER CABLE COMPRISING A JOINT AND METHODS FOR JOINTING ARMOURED POWER CABLES**

(71) Applicant: Nexans, 92400 Courbevoie (FR)
(72) Inventor: NES, Endre, 1779 Halden (NO); GOODING, Tina, 1710 Sarpsborg (NO); SANGAR, Robin, 1445 Drobak (NO); TOLLEFSEN, Henrik, 1782 Halden (NO)
(74) Representative: Onsagers AS

(57) **Abstract**

The present invention relates to subsea power cable assembly comprising a joint between a first- and a second- cable section, each cable section comprising at least one core member surrounded by at least one armouring layer, wherein the at least armouring layer of each cable section comprises a plurality of armouring wires and wherein at least one of the plurality of armouring wires of the first cable section is fixedly connected to at least one of the plurality of armouring wires of the second cable section by structural adhesive or a welded joint enforced by a structural adhesive extending across the welded joint.

## Description

### FIELD OF THE INVENTION

The present invention relates to a subsea power cable assembly comprising a joint between a first- and a second- cable section, each cable section comprising at least one armouring layer comprising a plurality of armouring wires and wherein at least one of the plurality of armouring wires of the first cable section is fixedly connected to at least one of the plurality of armouring wires of the second cable section.

### BACKGROUND

Power cables for intermediate to high voltage ratings typically comprise an inner conductor and several layers provided radially outside of the inner conductor, such as an electric insulation layer, a semiconductive shielding layer, an armouring layer and an outer sheathing.

Impact resistant multipolar cables are employed in a number of industries. Such cables provide protection against accidental impact to the cable. The cables can provide distribution of intermediate or high voltage electrical power.

Cables for subsea use, comprise armouring to obtain the required cable strength against tension forces. Such armouring is often provided as strength members in the form of multiple armouring wires often steel wires. A "steel wire armoured cable" commonly abbreviated "SWA", is a hard-wearing power cable designed for the supply of mains electricity. It is one type of a number of armoured electrical cables, and is used in underground systems, power networks and subsea applications. The type of SWA may be armoured one-core or three-core power cables.

For deep water applications, the armouring layer is often made of high-grade steel wires and conventional welding of these steel wires is challenging. Welds are also often the weakest point in an else uniform material. The problem is that great heat required in the welding process weakens the steel wires and weakens the formed joint and reduce the lifetime of the cable. Weld defects include cracks, lack of penetration, lack of fusion, porosity and change in material microstructure in the heat affected zone. When close to the material limits the natural variation in weld quality, even for the same welder, leads to unexpectable risk for failure. Welding of different materials with different melting points is also challenging.

In particular, the break load of a welded joint is reduced compared to the break load of the rest of the cable. As a result, the cable joint cannot withstand the tension generated during installation at deep waters.

It is disclosed herein subsea cable assembly comprising a joint and a method for joining armouring wires of a subsea cable wherein the joint has similar mechanical properties compared to the rest of the power cable.

### SUMMARY OF THE INVENTION

In a first aspect the present invention relates to a subsea power cable assembly comprising a joint between a first- and a second- cable section, each cable section comprising at least one core member surrounded by at least one armouring layer, wherein the at least one armouring layer of each cable section comprises a plurality of armouring wires and wherein at least one of the plurality of armouring wires of the first cable section is fixedly connected to at least one of the plurality of armouring wires of the second cable section by
a) structural adhesive or
b) a welded joint and a structural adhesive extending across the welded joint.

In one embodiment the armouring layers comprises a plurality of armouring wires are longitudinal armouring wherein the armouring wires run parallel to the axis of the cable.

In one embodiment the armouring layers comprises a plurality of armouring wires are helical armouring wherein the armouring wires are wound around the cable core in a helix or spiral pattern.

In an embodiment the structural adhesive has a length L and extends onto the armouring wire of the first and the second cable section according to the following:
-armouring wire of first cable section 40% (w/w) and armouring wire of second cable section 60% (w/w);
armouring wire of first cable section 60% (w/w) and armouring wire of second cable section 40% (w/w);
armouring wire of first cable section 50% (w/w) and armouring wire of second cable section 50% (w/w);

In one embodiment of b) the structural adhesive extends over a length L1 in the longitudinal direction of the armouring wires and may have a length L1a and L1b measured from the centre of the joint.

L1a and L1b may have equal length or different length and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

In the following when referring to a length (L), the length is measured in the longitudinal direction of the cable, unless specified otherwise.

In one embodiment the subsea power cable assembly 1 may be a HVDC cable or an HVAC cable.

In one embodiment the subsea power cable assembly 1 may comprise a single core 11 or a plurality of cores 11, 12, 13.

In one embodiment the subsea power cable assembly 1 may comprise two, three or four cable cores.

In one embodiment the joint 100 may be a repair joint.

In one embodiment the joint 100 may be a factory joint.

In one embodiment the armouring wires may be made of copper, aluminium or steel.

The armouring wires of the cable may be arranged in a longitudinal direction of each cable section. The armouring wires of the cable may be arranged in a helical direction of each cable section.

In one embodiment the armouring wires are made of metal.

For subsea applications the armouring wires of the armouring layers are often made of steel.

In one embodiment steel armouring wires of the armouring layers may be high grade steel of grade 90 and above.

Armouring wires of grade 90 or above have a minimum braking load of 900 MPa. The armouring wires may have a circular cross-sectional shape with a diameter of about 3 mm to 10 mm, such as around 4 mm to 7 mm.

In one embodiment the armouring wires may be rectangular parallelopiped bars arranged in the longitudinal direction of the subsea cable.

The dimensions of the bars may be 2 to 5 mm x 5 to 15 mm (hight x width).

The dimension of the individual armouring wire may be different from the dimension of the armouring wires of the armouring layers of the cable sections.

Joining of metal armouring wires using a structural adhesive is applicable to many types armouring layers however joining steel wires such as high-grade steel wires using a structural adhesive is particularly useful as welding of steel wires requires especially high temperatures.

Due to the high temperature the welded joint of metal wires, and especially steel wires may become brittle and with a lower mechanical strength compared to the rest of the armouring wire. An adhesive joining using a structural adhesive of steel wires permits joining at lower temperatures.

In one embodiment of the first aspect the subsea power cable assembly the at least one armouring wire of the of the first cable section is fixedly connected to the at least one armouring wire of the second cable section by an adhesive joint comprising a structural adhesive.

In one embodiment of the first aspect the adhesive joint is a butt joint or a bevel joint.

In one embodiment of the first aspect the adhesive joint is a strap joint such as a single-strap joint or a double-strap joint.

In one embodiment the adhesive joint is a joint comprises at least one individual armouring wire extending across the joint between the armouring wires and on onto the armouring wires on each side of the joint.

In one embodiment the at least one individual armouring wire has a length L2 and extends with a length L2a, L2b measured from the centre of the joint, the length L2a and L2b is equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

A simple-strap joint is a joint wherein the joint comprises an individual armouring wire extending across the adhesive joint between the armouring wires and on onto the armouring wires on each side of the adhesive joint thereby enforcing the joint.

In one embodiment a single strap joint the individual armouring wire has a length L2 and extends with a length L2a, L2b measured from the centre of the joint, the length L2a and L2b is equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

In one embodiment the individual armouring wire may have tapered ends. Tapered ends may reduce peel stresses at the ends.

In one embodiment of the first aspect the adhesive joint is a double-strap joint comprising two individual armouring wires extending across the adhesive joint between the armouring wires preferably on opposing sides of the joint and further extending on each side of the joint.

In one embodiment of a double-strap joint the one individual armouring wire has a length L3 and extends with a length L3a, L3b measured from the centre of the joint, the length L3a and L3b is equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm and the second individual armouring wire has a length L4 and extends with a length L4a, L4b measured from the centre of the joint, the length L4a and L4b is equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

In one embodiment of the first aspect the adhesive joint is an overlapping joint wherein the armouring wires of the first cable section are overlapping the armouring wires of the second cable section.

In one embodiment the overlapping joint is a single-lap joint wherein an armouring wire of the first cable section overlaps an armouring wire at the second cable section.

A structural adhesive is applied between the armouring wire of the first cable section and the armouring wire of the second cable section at the location of the overlap.

In one embodiment the length of the overlap of the single-overlap joint L7 is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm

In one embodiment of the first aspect the first cable section comprises a first armouring layer comprising a plurality of armouring wires and the second cable section comprises a first armouring layer comprising a plurality of armouring wires and a second armouring layer comprising a plurality of armouring wires and wherein joint is a double-lap joint wherein one armouring wire of the first armouring layer of the first cable section is arranged between an armouring wire of the first armouring layer of the second cable section and an armouring wire of the second armouring layer of the second cable section thereby forming a sandwich structure at the joint wherein the armouring wires of the two cable sections are overlapping each other.

In one embodiment the length of the overlap of the double-overlap joint L8 is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

In one embodiment of the first aspect the joint is a welded joint such as a butt joint, a bevel butt joint or a v-joint.

In one embodiment the welded joint further comprise at least one reinforcing individual armouring wire arranged across the welded joint.

In one embodiment the welded joint between an armouring wire of the first cable section and an armouring wire of the second cable section comprises at least one individual armouring wire extending across the welded joint between the armouring wires 18b, 28b and on onto the armouring wires 18b, 28b on each side of the joint.

In one embodiment the at least one armouring wire has a length L2 and extends with a length L2a, L2b measured from the centre of the joint, the length L2a and L2b is equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

In one embodiment the welded joint is a simple-strap joint comprising one individual armouring wire extending across the welded joint between the armouring wires 18b, 28b and on onto the armouring wires 18b, 28b on each side of the adhesive joint.

In one embodiment a single strap-joint the armouring wire has a length L2 and extends with a length L2a, L2b measured from the centre of the joint, the length L2a and L2b is equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

In one embodiment of the first aspect the adhesive joint is a double-strap joint comprising two individual armouring wires extending across the welded joint between the armouring wires 18b, 28b preferably on opposing sides of the joint and further extending on each side of the joint.

In one embodiment of a double-strap joint the one individual armouring wire has a length L3 and extends with a length L3a, L3b measured from the centre of the joint, the length L3a and L3b is equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm and the second individual armouring wire has a length L4 and extends with a length L4a, L4b measured from the centre of the joint, the length L4a and L4b is equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm,

In one embodiment the subsea power cable assembly the armouring wires are joined by a shouldered joint wherein the armouring wires comprises a main body and a concentric projection, wherein
- the concentric projection has a smaller cross-sectional area compared to the main body and
- concentric projections are fixedly connected by a welded joint or by an adhesive joint and wherein the joint further comprises at least one individual armouring wire extending across the welded joint or adhesive joint and wherein the at least one at least one individual armouring wire extends across the welded joint or adhesive joint and onto the armouring wire on each side of the joint.

In one embodiment the cross sectional-area of the main body compared to the cross-sectional area of the concentric projection is in the range from 1:0.9 to 1:0.1 such as from 1:0.9 to 1:0.5.

In one embodiment the length of the at least one individual armouring wire is L5 and extends with a length L5a and L5b on each side of the joint measured from the centre of the joint and L5a and L5b has equal length or different length and is of 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm

In one embodiment the armouring wires have the concentric projection generated by cutting away parts of the armouring wires at all four sides and the joint further comprises an armouring sheath wrapped around the welded joint or adhesive joint and extends onto the armouring wire on each side of the joint.

In one embodiment the length of the armouring sheath is L5 and extends with a length on each side of the joint measured from the centre of the joint and L5a and L5b has equal length or different length and is of 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

In one embodiment of the first aspect or any embodiments described in relation to the first aspect or the second aspect the structural adhesive is selected from a group comprising or consisting of two component epoxy, a two component toughened methacrylate, cyanoacrylate adhesive, two component acrylic and any combinations thereof.

In one embodiment of the first aspect or any embodiments described in relation to the first aspect or the second aspect the armouring wires are steel wires.

In one embodiment of the first aspect or any embodiments described in relation to the first aspect or the second aspect the steel wires are at least grade 90.

In one embodiment of the first aspect or any embodiments described in relation to the first aspect or the second aspect the armouring wires are rectangular parallelopiped bars.

**In a second aspect** there is provided a method of joining a first subsea power cable section and a second subsea power cable section,
the first cable section comprising at least one core mand an armouring layer, the armouring layer comprising a plurality of armouring wires
the second cable section comprising a at least one core and an armouring layer, the armouring layer comprising a plurality of armouring wires,
wherein the method comprises the steps of:
   a) joining the at least one core of the first- and of the second- cable section; and
   b) fixedly connecting at least one of the plurality of armouring wires of the armouring layer of the first cable section to at least one of the plurality of armouring wires of the armouring layer of the second cable section by:
      c1) applying a structural adhesive or
      c2) welding the armouring wires to each other, forming a welded joint and applying a structural adhesive across the welded joint.

In one embodiment of the method of step c1) the armouring wires are fixedly connected by an adhesive joint comprising a structural adhesive.

In one embodiment of the method the adhesive joint is generated by fixedly connecting of a butt end or bevel end of the armouring wire of the first cable section to a butt end or bevel end of the armouring wire of the second cable section thereby forming a pair of adhesively joined armouring wires.

In one embodiment of the method the adhesive joint comprises a structural adhesive layer extending across the adhesive joint.

In one embodiment the method further comprises
c) providing at least one individual armouring wire;
d) fixedly connecting at least one individual armouring wire to the pair of adhesively joined armouring wires wherein the individual armouring wire is arranged across pair of joined armouring wires at the location of the joint; and
e) providing an adhesive layer comprising a structural adhesive between individual armouring wire and the pair of joined armouring wires thereby forming a sandwich structure at the joint and wherein the individual armouring wire is arranged in the longitudinal direction of the power cable assembly.

In one embodiment a plurality of individual armouring wires are fixedly connected in the longitudinal direction by a structural adhesive thereby forming an armouring layer.

In one embodiment of the method the adhesive joint is an overlapping joint such as a single-lap joint or a double-lap joint.

In one embodiment of the method the single-lap joint is prepared by applying a structural adhesive layer between overlapping armouring wires thereby forming a sandwich structure at the joint wherein the armouring wires are overlapping each other.

In one embodiment of the method the welded joint is a butt joint, a bevel butt joint or a v-joint thereby forming a pair of welded armouring wires.

In one embodiment the method comprises:
- providing at least one individual armouring wire;
- joining at least one individual armouring wire to the pair of welded armouring wires wherein the individual armouring wire is arranged across the welded joint; and
- providing an adhesive layer comprising a structural adhesive between individual armouring wire and the welded pair of armouring wire thereby forming a sandwich structure at the joint and wherein the individual armouring wire is arranged in the longitudinal direction of the power cable assembly and extends on each side of the welded joint.

In one embodiment the armouring wires comprises a main body and a concentric projection of length respectively, and wherein the concentric projections are prepared by cutting away parts of the armouring wires wherein
- the concentric projection has a smaller cross-sectional area compared to the main body and
- the concentric projections are fixedly connected by welding or a structural adhesive.

In one embodiment of the second aspect the armouring wires, the individual armouring wires and the armouring sheet at the location of the joint are pre-treated before applying the structural adhesive.

In one embodiment of the second aspect the pre-treatment is selected from sandblasting and acid wash or a combination.

In one embodiment the structural adhesive is loaded in shear.

### BRIEF DESCRIPTION OF DRAWINGS

Figure 1A depicts a cross section A-A of a one-phase high voltage subsea cable, HVDC cable shown in Figure 5, 6 and 8.
Figure 1B depicts a cross section A-A of a three-phase high voltage subsea cable.
Figure 2A illustrates a cross sectional side-view of butt joint 40a,70a between two armouring wires 18b, 28b wherein the butt joint is welded 70a and comprising welding material 80 or an adhesive but joint 40a comprises a structural adhesive 60.
Figure 2B illustrates cross sectional side-view of a bevel joint 40b, 70b between two armouring wires 18b, 28b wherein the bevel joint is welded 70b and comprising welding material 80 or the bevel joint is an adhesive joint 40b comprises a structural adhesive 60.
Figure 2C illustrates cross sectional side-view of a welded v-joint 70c between two armouring wires 18b, 28b comprising welding material 80.
Figure 2D illustrates a cross sectional side-view of a welded butt joint 70a comprising welding material 80 or an adhesive butt joint 40a comprises a structural adhesive 60 between two armouring wires 18b, 28b. The butt joint is reinforced by a structural adhesive 60 extending over the butt joint and on each side of the joint with length L1a, L1b.
Figure 2E illustrates a cross sectional side-view of a single-lap joint 40c.
Figure 2F illustrates a cross sectional side-view of a double-lap joint 40d.
Figure 2G illustrates a cross sectional side-view of a simple-strap butt joint 40e/51.
Figure 2H illustrates a cross sectional side-view of a double-strap butt joint 40f/52.
Figure 2I illustrates a cross sectional side-view of a shouldered double-strap joint 40g/53.
Figure 2J illustrates a cross sectional side-view of parts of a shouldered double-strap joint depicted in figure 2I.
Figure 2K-2N depicts cross sectional view A-A of armouring wires with different concentric projections. In Figure 2K all the sides a, b, c, d of the main body 18c of the armouring wire 18b are partly cut away. Figure 2L and 2M only two opposing sides a, b or c, d respectively of the armouring wire are partly cut away. Figure 2N illustrates a further example wherein parts of the armouring wire has been cut away on side a, d.
Figure 3 illustrates a cross sectional side-view of a joint 100 between two cable sections 10,20 wherein each cable section comprises a core 11,21 and a first armouring layer 18,28 surrounding the core 11,21 and wherein the first armouring layer 18,28 of each cable section 10, 20 comprises armouring wires 18b, 28b arranged in a longitudinal direction of each cable section 10,20 and surrounding the first armouring layer an outer covering sheath 19, 29. The joint between the armouring wires 18b, 28b illustrates an adhesive butt joint 40a comprises a structural adhesive 60.

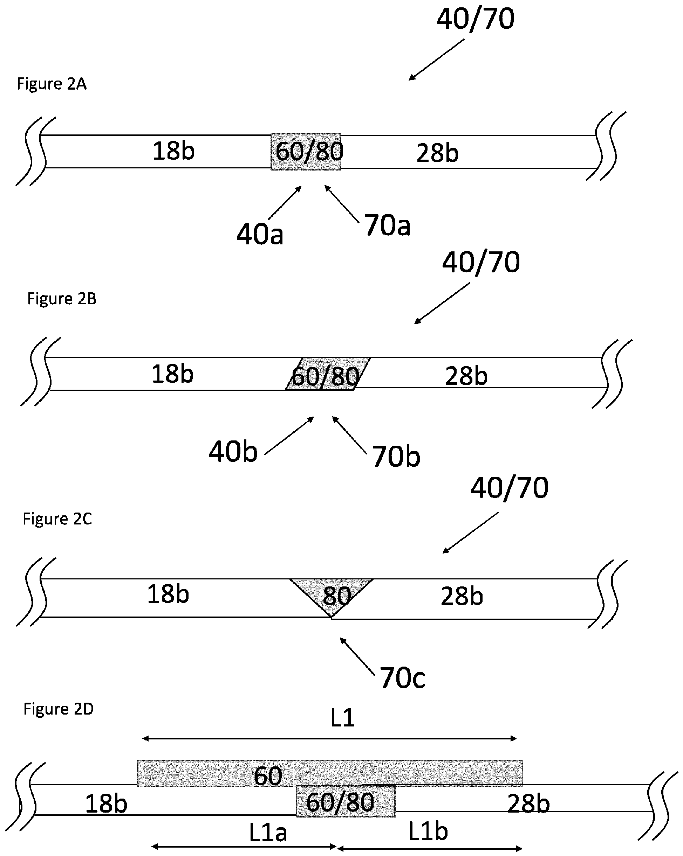

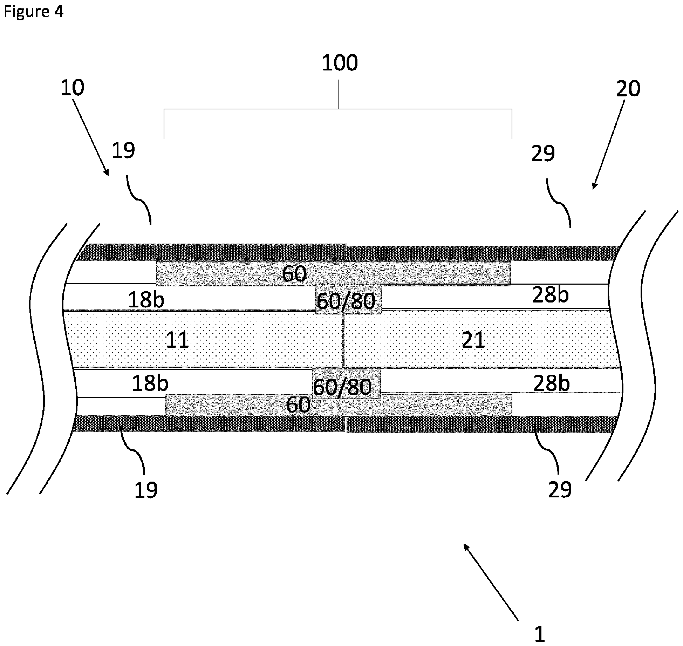

Figure 4 illustrates a cross sectional side-view of a joint 100 between two cable sections 10,20 wherein each cable section comprises a core 11,21 and a first armouring layer 18,28 surrounding the core 11,21 and wherein the first armouring layer 18,28 of each cable section 10, 20 comprises armouring wires 18b, 28b arranged in a longitudinal direction of each cable section 10,20 and surrounding the first armouring layer an outer covering sheath 19, 29. The joint between the armouring wires 18b, 28b illustrates a butt joint 40b, 70b wherein the butt joint is welded 70b and comprising welding material 80 or the butt joint is an adhesive joint 40b comprises a structural adhesive 60. The joint further comprises a reinforcement layer comprising a structural adhesive 60 extending across the butt joint and onto the armouring wires 18b, 28b each side of the joint. Further details of the joint between the armouring wires is illustrated in figure 2D.
Figure 5 illustrates a cross sectional side-view of a joint 100 wherein the an armouring wire 18b of the first cable section 20 is joined to an armouring wire 28b of the second cable section by a single-lap joint as further illustrated and described in figure 2G. Figure 5 illustrates one example of a single-lap joint between armouring wires of a first- and second- cable section 10, 20.
Figure 6 illustrates another example of a single-lap joint between armouring wires of a first- and second- cable section 10, 20.
Figure 7 illustrates a cross sectional side-view of a joint 100 wherein an armouring wire 18b of the first cable section 10 is joined to two armouring wires 28b and 38b of the second cable section 20 by a double-lap joint 40f as further illustrated and described in figure 2F.
Figure 8 illustrates a cross sectional side-view of a joint 100 wherein an armouring wire 18b of the first cable section 10 is joined to an armouring wire 28b of the second cable section 20 by a simple-strap butt joint 40e/51. Further details of this type of joint is illustrated and described in relation to figure 2G.
Figure 9 illustrates a cross sectional side-view of a joint 100 wherein an armouring wire 18b of the first cable section 10 is joined to an armouring wire 28b of the second cable section 20 by a double-strap butt joint 40f/52. Further details of this type of joint is illustrated and described in relation to figure 2H.
Figure 10 illustrates a cross sectional top-view of a joint 100 in figure 8 or figure 9 wherein the joint 100 is a joint between two cable sections 10, 20 each cable section comprising a core 11, 21 and a first armouring layer 18, 28 surrounding the core and at least one enforcing armouring wire 48b extending across the joint and wherein the joint 100 further comprises a structural adhesive 60 between each of the armouring wires 48b thereby forming an armouring layer 48.
Figure 11 depicts a cross sectional side-view of a joint 100 wherein the joint between the armouring wires 18b of the first cable section and the armouring wires 28b of the second cable section is a shouldered double strap joint. Further details of this type of joint is illustrated and described in relation to figures 2I to 2N.
Figure 12 depicts a diagram showing the ductility of an overlapping joint of different length comprising a structural adhesive. The ductility of the joint is measured in Newton.
Figure 13 illustrates the effect on the ductility of a joint comprising overlapping armouring wires by changing the curing time of the structural adhesive layer applied between the overlapping armouring wires. The curing temperature is kept at 60°C and the region of overlap is 200 mm.

The drawings are sketches of the cables or parts of cables and do not comprise all the details of the subsea power cable assembly.

### DETAILED DESCRIPTION

A subsea power cable assembly 1 comprising a joint 100 between a first- and a second- cable section 10,20, each cable section comprising at least one core member 11, 21 surrounded by at least one armouring layer, wherein the at least one armouring layer 18,28 of each cable section 10, 20 comprises a plurality of armouring wires 18b, 28b and wherein at least one of the plurality of armouring wires 18b of the first cable section 10 is fixedly connected to at least one of the plurality of armouring wires 28b of the second cable section 20 by
a) structural adhesive 60 or
b) a welded joint 70 and a structural adhesive 60 extending across the welded joint.

An advantage with using adhesive is that it easy to increase the adhesive area, thus increasing the strength of the joint. Furthermore, it is lightweight, fatigue resistant and it can join dissimilar materials.

The longitudinal direction of a cable section refers to the axis along the length of the cable. In other words, it is the direction that runs parallel to the cable's length.

In the following description, various examples and embodiments of the invention are set forth in order to provide the skilled person with a more thorough understanding of the invention. The specific details described in the context of the various embodiments and with reference to the attached drawings are not intended to be construed as limitations.

Where a numerical limit or range is stated herein, the endpoints are included. Also, all values and sub ranges within a numerical limit or range are specifically included as if explicitly written out.

### Definitions:

The term "high voltage" as applied herein refers to a voltage above 36kV such as in the range 50 kV to 800 kV.

In the following, it should be note that the term "comprising", encompasses the term "consisting of'.

The term "bevel joint" or a "bevel butt joint" as applied herein refers to a butt joint where the ends of the two armouring wires to be joined are cut at an angle. Such a joint may also be referred to a mitre- or a sloping joint. In some embodiments only one of the ends may be cut at an angle.

The term "butt joint" as applied herein is a joint between ends of two elements without overlapping. The angle of a butt joint is straight.

An example of a butt joint or a bevel joint between two armouring wires 18, 28 is shown in figure 2 A,B.

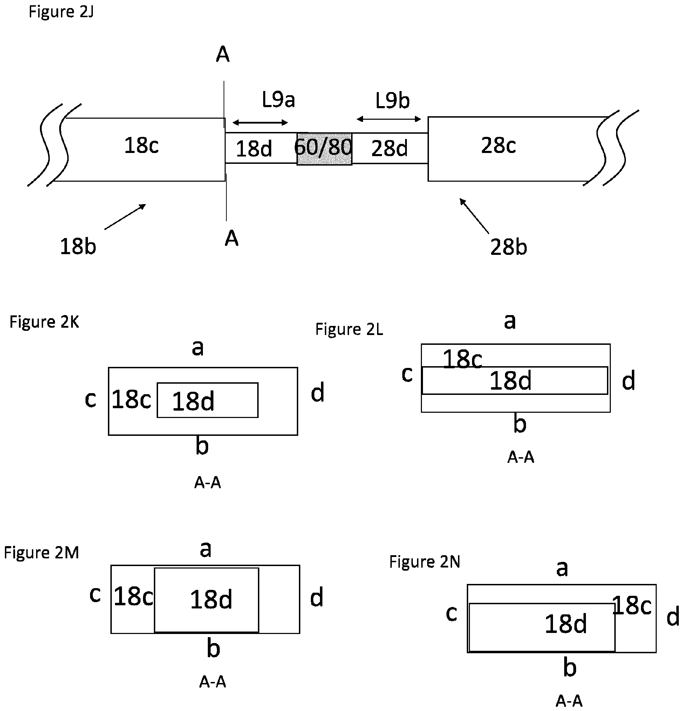

The term "concentric projection" as applied herein may have any shape, for example circular, square shaped or a rectangular parallelopiped, preferably a rectangular parallelopiped. The concentric projection is formed by removing parts of the armouring wires from the end of the wire and at a certain length. Examples of armouring wires comprising a concentric projection are illustrated in figures 2J to 2N.

The term "armouring wire" as applied refer to wires of the armouring layer of a subsea cable. The subsea cable may be a HVDC cable or an HVAC cable. The armouring wire may be made of metal such as copper, aluminium or steel.

The term "structural adhesive" as used herein is an adhesive which "hardens" or cures into a material capable of holding two or more substrates together. The aim is bearing the forces involved for the lifetime of the product. The product may undergo shock, vibration, chemical exposure, temperature excursions or many other types of potentially weakening or destructive agents, and still be bonded.

The structural adhesive may be in form of a layer.

Examples of structural adhesives are two component epoxy, a two component toughened methacrylate, cyanoacrylate adhesive, two component acrylic and any combinations thereof.

The term "strap joint" as used herein is a joint wherein two abutting armouring wires are joint by welding or a structural adhesive and reinforced by at least one individual armouring wire or strap joined to the jointed abutting armouring wires by a structural adhesive.

A simple-strap joint is a joint wherein two abutting armouring wires are joint by welding or a structural adhesive and reinforced by one individual armouring wire or strap.

A double-strap joint is a joint wherein two abutting armouring wires are joint by welding or a structural adhesive and reinforced by two individual armouring wire or strap preferably arranged on opposing sides of the jointed abutting armouring wires.

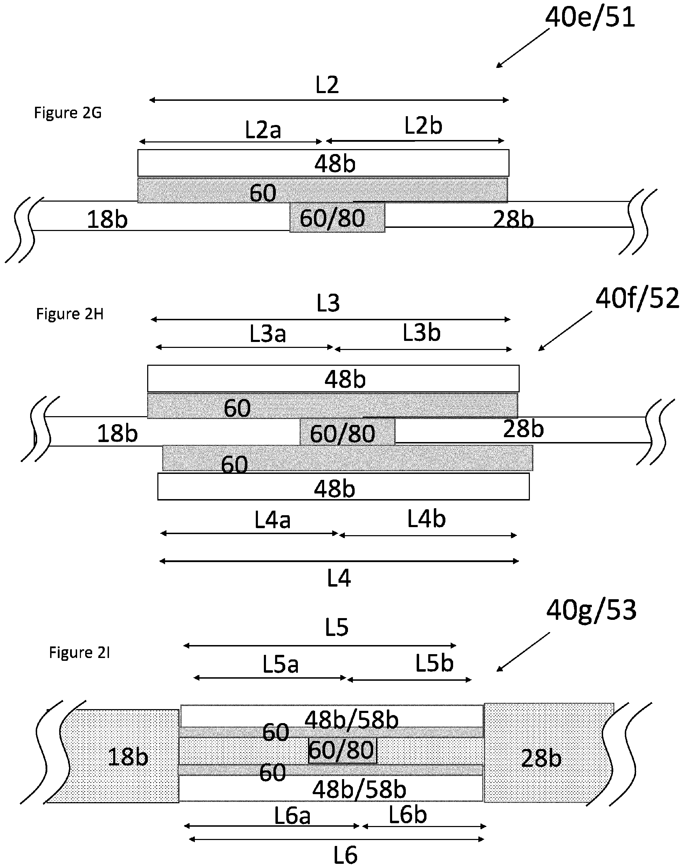

Example of strap-joints are shown in figures 2G and 2H.

The term "lap-joint" or "overlap-joint" as used herein is a joint wherein an armouring wire from a first cable section is joint to an armouring wire of the second cable section by the two wires overlapping each other and wherein the overlap has a certain length

Strap joints and lap joints have increased cross-sectional area at the joint compared to the cross-sectional area of the rest of the two cable sections outside the area of the joint.

The term "across" or "extending across" in relation to a joint as used herein is to be interpreted as covering the joint and extending at a certain length onto the armouring wires on each side of the joint. "Across" or "extending across" refers to the longitudinal direction of the joint.

In other words, the structural adhesive extending across the joint may be understood as the structural adhesive covering the area of the joint and a further area on each of the at least one of the plurality of armouring wires of the first and second cable sections. The area covered by the structural adhesive has a width W and a length L.

W may be 50%, 60%, 70%, 80%, 90%, 100%, 110%, 150 % of the width of the at least one of the plurality of armouring wires. Preferably W may be equal to the width of the at least one of the plurality of armouring wires.

The description and claims provide examples of length of structural adhesive layers and length of individual armouring wires that extend across the joint and onto the wires on each side of the joint.

The orientation of armouring wires in a subsea cable refers to the arrangement or pattern in which the armouring wires are laid around the cable core. There are two primary orientations for armour wires in subsea cables: longitudinal and helical.

### Longitudinal Armouring:

- In longitudinal armouring, the armour wires run parallel to the axis of the cable.
- The wires are typically applied in a straight, side-by-side fashion along the length of the cable.
- Longitudinal armouring provides protection against axial forces, making the cable resistant to stretching and compression.

### Helical Armouring:

- In helical armouring, the armour wires are wound around the cable core in a helix or spiral pattern.
- This can be a single helix, where the wires make one complete spiral around the cable, or a double helix, where there are two sets of wires wound in opposite directions.
- Helical armouring offers protection against radial forces, such as those caused by crushing or external pressure.
- The helical structure also provides flexibility, allowing the cable to bend without excessive stress on the armour.

The choice between longitudinal and helical armouring depends on the specific requirements of the subsea cable and the conditions it will face. Longitudinal armouring is more effective in providing protection against axial forces, while helical armouring is better suited for resisting radial forces. Many subsea cables incorporate a combination of both longitudinal and helical armouring to achieve comprehensive protection against various mechanical stresses.

### Power cable comprising a cable joint

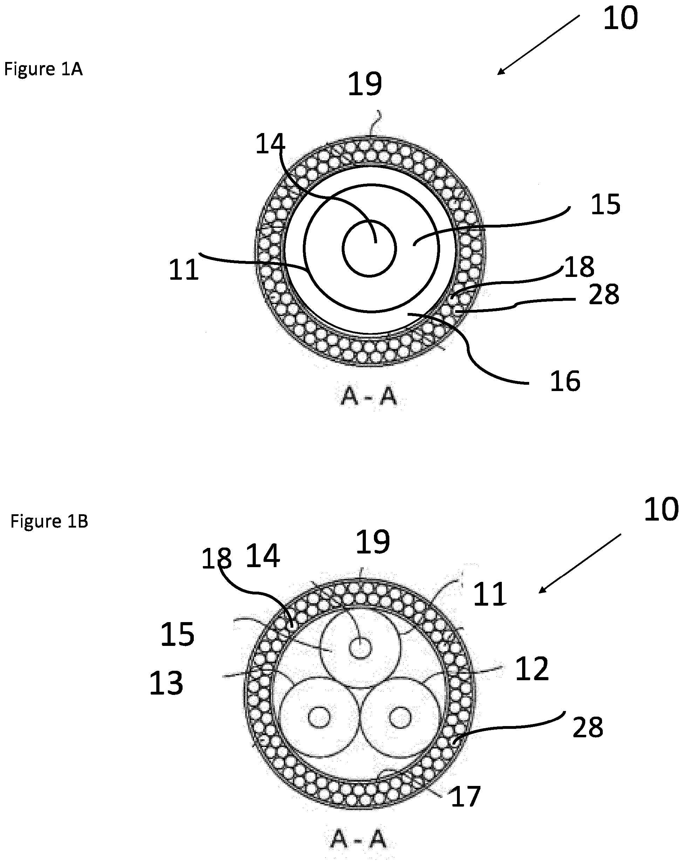

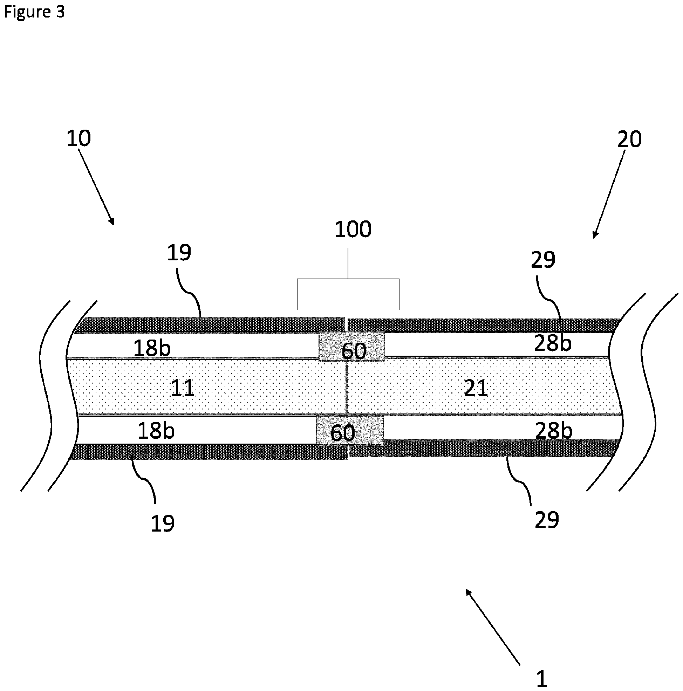

The invention is described further with reference to the Figures 1 to 11 of the drawings, which show different views and embodiments of the cable assembly 1 comprising a cable joint 100.

Power cables for intermediate to high current capacities have typically one or more electric conductors at its core followed by electric insulation and shielding of the conductors, an inner sheathing protecting the core, armouring layer, and an outer sheathing. The conductors of power cables are typically made of either aluminium or copper. The conductor may either be a single strand surrounded by electric insulating and shielding layers, or a number of strands arranged into a bunt being surrounded by electric insulating and shielding layers.

The subsea power cable assembly 1 may be a HVDC cable or an HVAC cable.

The subsea power cable assembly 1 may comprise a single core 11 or a plurality of cores 11, 12, 13.

The subsea power cable assembly 1 may comprise two, three or four cable cores.

The joint 100 may be a repair joint or a factory joint.

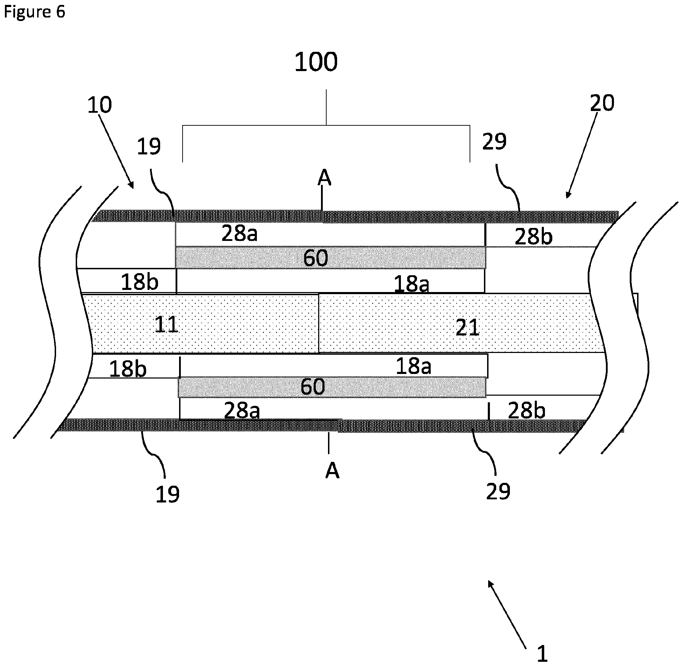

Figure 1A depicts the cross-section A-A of the cable assembly depicted in figure 6. The cable sections 10, 20 are both single armoured cables with an overlap of the armouring layer 18 of the first cable section and the armouring layer 28 of the second cable section 20. overlapping the armouring layer at the first cable section thereby forming a double armouring layer at the location of the joint.

Each cable sections comprises one core in a DC cable, figure 1A and in an AC cable, the cable has three core members, Figure 1B.

In the embodiments described in the following, cable sections of an DC cable for subsea applications have one core member 11 that is joined. The cable core includes an elongated conductor 14 surrounded by an insulation layer 15 and an active protective sheath acting as a water barrier (the water barrier is not shown). Surrounding the cable core there may be semi conducting shield 17. At least one armouring layer 18 is surrounding the semi conducting shield 17. An outer covering sheath 19 for example made of polypropylene is surrounding the at least one armouring layer 18.

The armouring layers 18, 28, 38 comprises a plurality armouring wires 18b, 28b, 38b.

An armouring wire of the first cable section is joined to an armouring wire of the second cable section by different types of joints as described in further details below and in the enclosed figures.

The armouring wires may be made of metal.

The armouring wires may be made of copper, aluminium or steel.

For subsea applications the armouring wires are often made of steel.

The steel armouring wires may be high grade steel of grade 90 and above.

Armouring wires of grade 90 or above have a minimum braking load of 900 MPa.

The armouring wires may have a circular cross-sectional shape with a diameter of about 3 mm to 10 mm, such as around 4 mm to 7 mm.

The armouring wires may be rectangular parallelopiped bars arranged in the longitudinal direction of the subsea cable.

The armouring wires may be rectangular parallelopiped bars wound around the cable core in a helix or spiral pattern.

The dimensions of the bars may be 2 to 5 mm x 5 to 15 mm (hight x width).

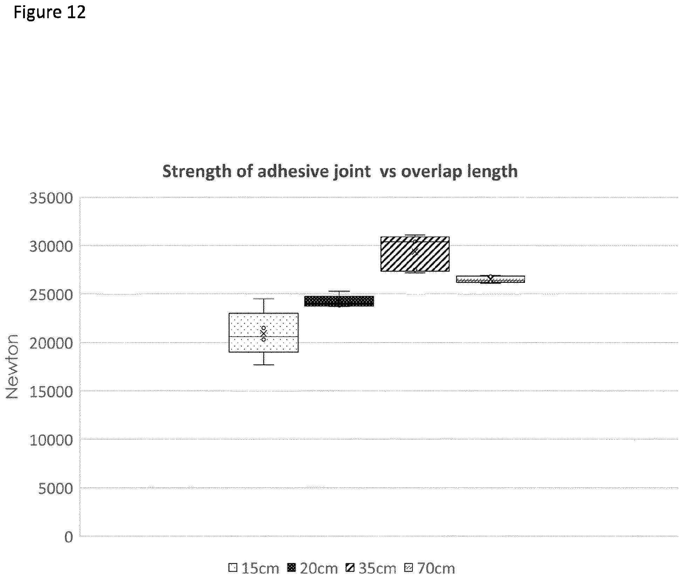

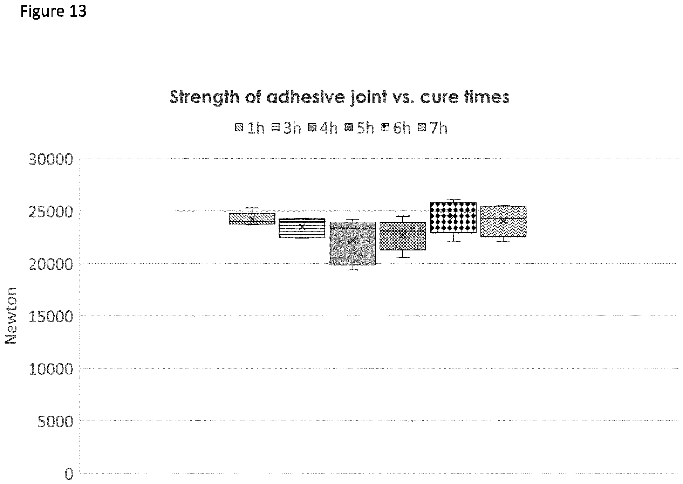

Joining of armouring wires using a structural adhesive is applicable to many types armouring layers however joining steel wires such as high-grade steel wires using a structural adhesive is particularly useful as steel wires requires high temperatures for welding. The welded joint of steel wires may become brittle and with a lower ductility compared to the rest of the armouring wire. An adhesive joining using a structural adhesive of steel wires requires lower temperatures and experimental test, see the examples and figures 12 and 13 shows that the ductility of an adhesive single-lap joint of steel wires is similar to the ductility of steel wires used in armouring layers of subsea cables.

The structure of the joint between an armouring wire 18b of the first cable section 10 and the armouring wire 28b of a second cable section may vary.

In the sections below different joint structures applicable for joining armouring wires are described with reference to the figures.

The necessary size of the overlap between jointed armouring wires, to ensure sufficient strength and resistance, will depend on the cable, the cable design, the type of jointing, the number of wires in the armouring layer.

The joining of an armouring wire 18b of the first cable section 10 to an armouring wire 28b of the second cable section 20 may be by welding or an adhesive as illustrated in figures 2A to 2C.

The example joints described in figures 2A to 2C may be reinforced by a structural adhesive 60 as illustrated in figure 2D and figure 4

Figure 2D illustrates a cross sectional side-view of a joint between an armouring wire 18b of the first cable section 10 and the armouring wire 28b of a second wherein the armouring wires 18b, 28 are joined by wherein the joint is a butt joint 70a comprising welding material 80 or an adhesive butt joint 40a comprises a structural adhesive 60 between two armouring wires 18b, 28b. The butt joint is reinforced by a structural adhesive 60 extending over the butt joint and on each side of the joint.

The structural adhesive 60 may have a length L1 and extending over a length L1a, L1b in the longitudinal direction of the armouring wires and wherein L1a and L1b are measured from the centre of the joint.

L1a and L1b may have equal length or different length and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

The butt joint may be exchange with other types of joins illustrated in Figures 2B and 2C.

A bevel joint providing an increased surface area for the weld, resulting in enhanced weld strength.

Figure 4 illustrates a cross sectional side-view of a joint 100 between two cable sections 10,20 wherein each cable section comprises a core 11,21 and a first armouring layer 18,28 surrounding the core 11,21 and wherein the first armouring layer 18,28 of each cable section 10, 20 comprises armouring wires 18b, 28b arranged in a longitudinal direction of each cable section 10,20 and surrounding the first armouring layer an outer covering sheath 19, 29. The joint between the armouring wires 18b, 28b illustrates a butt joint 40b, 70b wherein the butt joint is welded 70b and comprising welding material 80 or the butt joint is an adhesive joint 40b comprises a structural adhesive 60. The joint further comprises a reinforcement layer comprising a structural adhesive 60 extending across the butt joint and onto the armouring wires 18b, 28b each side of the joint. Further details of the joint between the armouring wires is illustrated in figure 2D

### Overlapping joints

The adhesive joint between an armouring wire of a first cable section and an armouring wire of a second cable section may be an overlapping joint.

### Single-lap joint

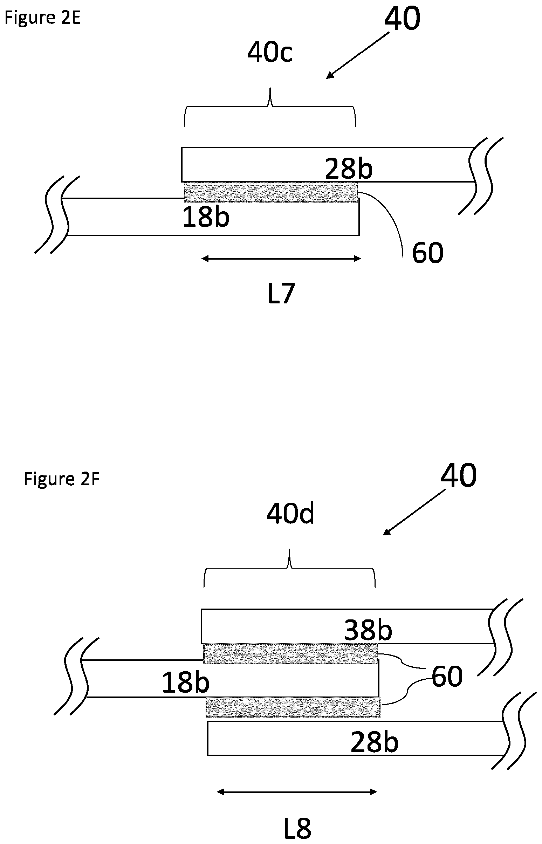

Figure 2E illustrates a cross sectional side-view of a single-lap joint 40c between two armouring wires 18b, 28b wherein the overlapping armouring wires 18b, 28b has a length L7 and the armouring wires are glued together by a layer of a structural adhesive 60.

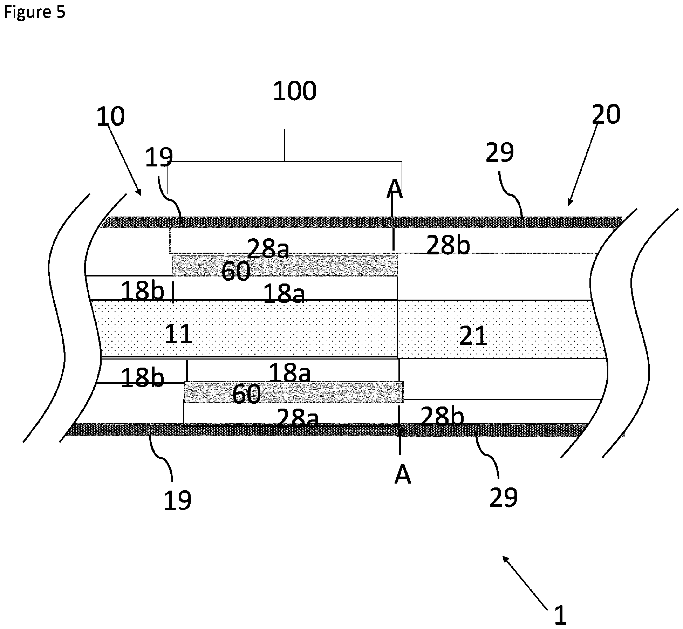

Figures 5 and 6 illustrates further aspects of a single-lap joint 40c and as described below.

With reference to figure 5 the lap joint is a single lap joint (40c) wherein the joint 100 comprising a portion 18a, 28a of the armouring wires 18b, 28b of the armouring layer 18,28 of each cable section 10,20 wherein the portion of the armouring wires of armouring layer of either the first- or the second- cable section extend beyond its respective core 11,21 and onto the respective other core to overlap with a portion of the armouring wires of the respective other cable section forming an overlapping region wherein a structural adhesive layer 60 is arranged between the portion of each of the armouring wires 18a, 28a in the overlapping region forming a sandwich structure at the joint 40.

The length of the overlap of the single-overlap joint L7 may be about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm

With reference to figure 6 the joint 100 comprising a portion 18a, 28a of the armouring wires 18b, 28b of the armouring layer 18,28 of each cable section 10,20 wherein the portion of the armouring wires of armouring layer of either the first- or the second- cable section extend beyond its respective core 11,21 and onto the respective other core to overlap with a portion of the armouring wire of the respective other cable section forming an overlapping and wherein a structural adhesive layer (60) is arranged between the portion 18a, 28a of each of the armouring wires in the overlapping region forming a sandwich structure at the joint 40c.

The length of the overlap of the single-overlap joint L7 may be about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm

### Double-lap joint

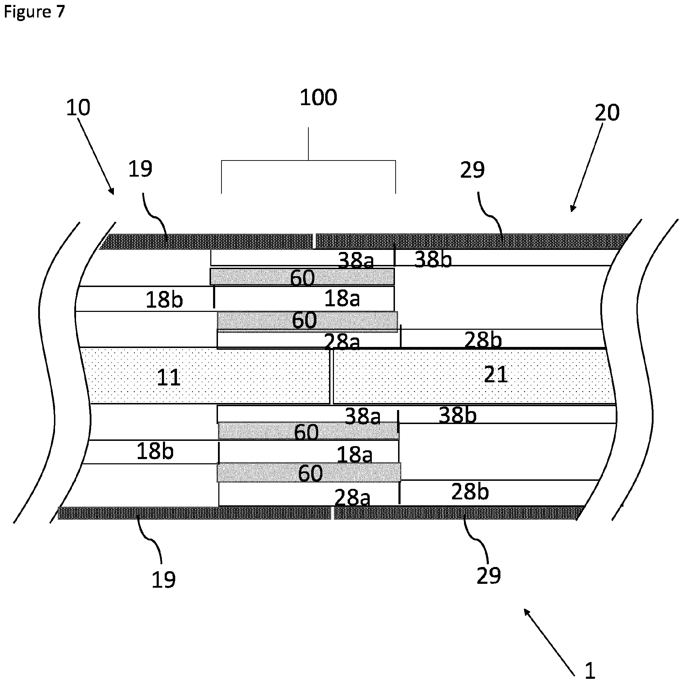

In certain aspects the joint between cable section may be a joint wherein the first cable section comprises one armouring layer and the second cable section comprises two armouring layers. In this situation the joint between the armouring wires of the firs and the second cable section may be a double-lap joint. A double-lap joint is illustrated in figures 2F and provided within a joint 100 an illustration is shown in figure 7.

Figure 2F illustrates a cross sectional side-view of a double-lap joint 40d of armouring wires wherein the first cable section 10 comprises a first armouring layer 18 comprising a plurality of armouring wires 18b and the second cable section 20 comprising a first armouring layer 28 comprising a plurality of armouring wires 28b and a second armouring layer 38 comprising a plurality of armouring wires 38b wherein an armouring wire 18b of the first cable section 10 is arranged between an armouring wire 28b of the first armouring layer 28 of the second cable section 20 and an armouring wire 38b of the second armouring layer 38 of the second cable section 20 thereby forming a sandwich structure at the joint wherein the armouring wires of the two cable sections are overlapping each other.

The length of the overlap of the double-overlap joint L8 may be about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

With reference to figure 7 the joint 100 comprises a first cable section 10 comprising an armouring layer 18 comprising armouring wires 18b and the second cable section comprises two armouring layers 28, 38 comprising armouring wires 28b, 38b wherein the joint 100 comprises portion of the armouring wires 18a of the armouring layer 18 of the first cable section 10 arranged between a portion of the armouring wires 28a, 38a of the two armouring layers 28, 38 of the second cable section 20 and wherein the structural adhesive layers 60 are arranged between the portion of the armouring wires 18a of the armouring layer 18 of the first cable section 10 and the portion of the armouring wires 28a, 38a of the two armouring layer 28,38 of the second cable section 20 forming a sandwich structure at the joint 40.

The size of the structural adhesive 60 may be equal to the size of the overlap.

The size of the structural adhesive 60 may occupy a smaller area compared to the size of the overlap.

### Strap joints

The joint between an armouring wire of a first cable section and an armouring wire of a second cable section may be a strap-joint such as a single-strap joint or a double strap joint.

### Simple-strap joint

Figure 2G illustrates a cross sectional side-view of a simple-strap butt joint 40e/51 between two armouring wires 18b, 28b wherein the butt joint is welded 70a and comprising welding material 80 or an adhesive butt joint 40a comprises a structural adhesive 60. The joint further comprises individual armouring wire 48b extending across the butt joint and on each side of the joint reinforcing the butt joint. The armouring wire 48b is glued to the butt jointed armouring wire by a structural adhesive 60 thereby reinforcing the butt joint.

The individual armouring wire may have a length L2 and extends with a length L2a, L2b measured from the centre of the joint, the length L2a and L2b may be equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

The butt joint may be exchange with other types of joins illustrated in Figures 2B and 2C.

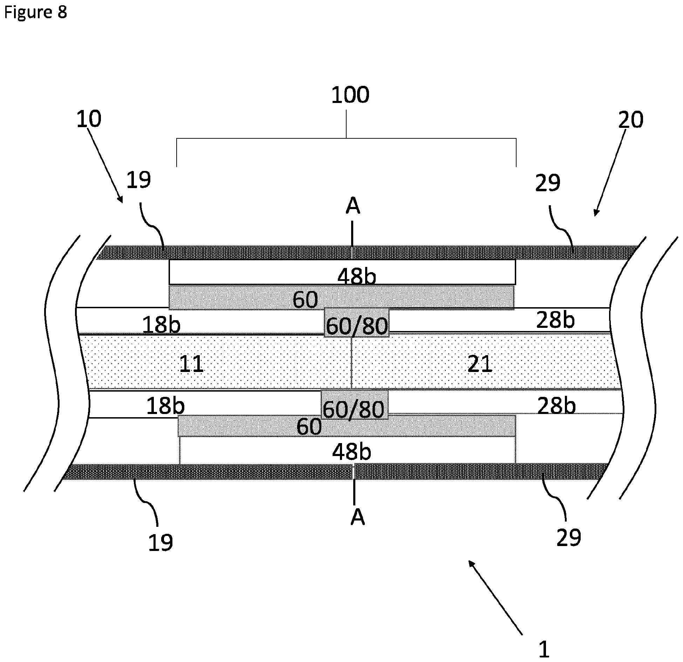

Figure 8 illustrates a cross sectional side-view of a joint 100 between two cable sections 10,20 wherein each cable section comprises a core 11,21 and a first armouring layer 18,28 surrounding the core 11,21 and wherein the first armouring layer 18,28 of each cable section 10, 20 comprises armouring wires 18b, 28b arranged in a longitudinal direction of each cable section 10,20 and surrounding the first armouring layer an outer covering sheath 19, 29. The armouring wires 18b, 28b are joined by a simple-strap butt joint 40e/51.

### Double-strap joint

Figure 2H illustrates a cross sectional side-view of a double-strap butt joint 40f/52 between two armouring wires 18b, 28b wherein the butt joint is welded 70a and comprising welding material 80 or an adhesive but joint 40a comprises a structural adhesive 60. The joint further comprises two individual armouring wires 48b extending across the butt joint and preferably arranged on opposite sides of the butt joint compared to each other thereby forming a sandwich structure. The armouring wires 48b extends across the butt joint and onto the armouring wire 18b, 28b of each cable section. The armouring wires 48b are glued to the butt jointed armouring wire by a structural adhesive 60 thereby reinforcing the butt joint.

One of the individual armouring wire may have a length L3 and extends with a length L3a, L3b measured from the centre of the joint, the length L3a and L3b may be equal or different and may be about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm and the second individual armouring wire may have a length L4 and extends with a length L4a, L4b measured from the centre of the joint, the length L4a and L4b may be equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm,

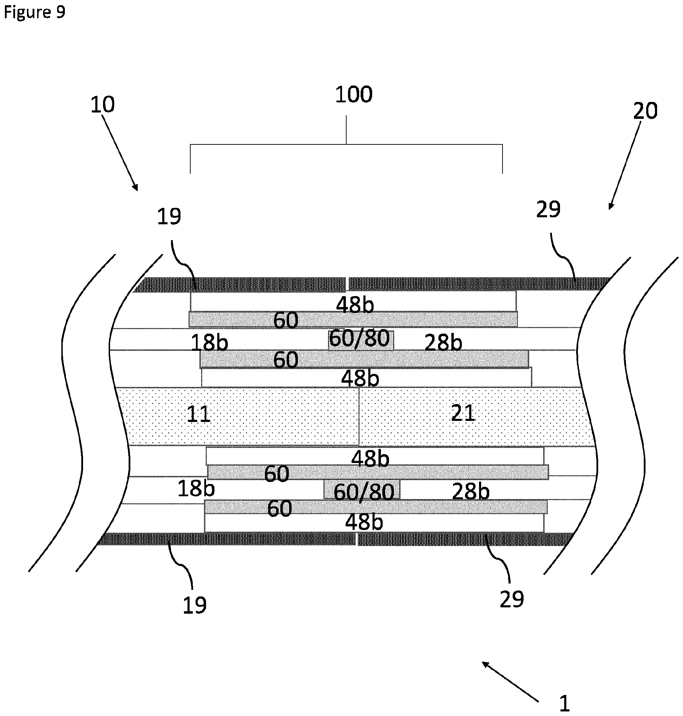

Figure 9 illustrates a cross sectional side-view of a joint 100 between two cable sections 10,20 wherein each cable section comprises a core 11,21 and a first armouring layer 18,28 surrounding the core 11,21 and wherein the first armouring layer 18,28 of each cable section 10, 20 comprises armouring wires 18b, 28b arranged in a longitudinal direction of each cable section 10,20 and surrounding the first armouring layer an outer covering sheath 19, 29. The armouring wires 18b, 28b are joined by a double-strap butt joint 40f/52. Further details of this type of joint is illustrated and described in relation to figure 2H as described above.

### Adhesive joining of individual armouring wires 48b thereby forming an armouring layer

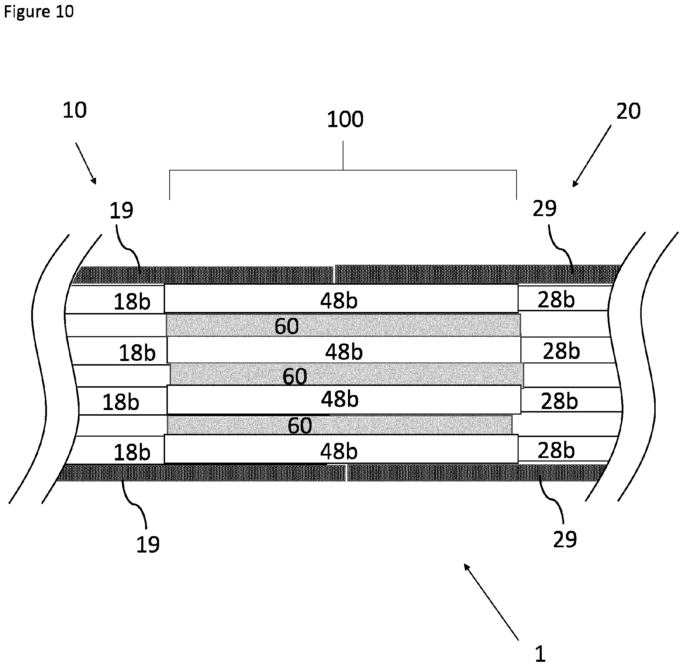

Reference to adhesive joining of individual armouring wires 48b is made to figure 10 which illustrates a cross sectional top-view of a joint 100 in figure 8 or figure 9 wherein the joint 100 is a joint between two cable sections 10, 20 each cable section comprising a core 11, 21 and a first armouring layer 18, 28 surrounding the core and at least one enforcing armouring wire 48b extending across the joint and wherein the joint 100 further comprises a structural adhesive 60 between each of the armouring wires 48b thereby forming an armouring layer 4.

The length of the individual armouring wires 48b is described above.

### Shouldered joint

A shouldered joint may be a shouldered strap joint comprise at least one armouring wire 48b arranged a cross a welded j oint or adhesive j oint between an armouring wire of a first cable section and an armouring wire of a second cable section.

Figure 2I illustrates a cross sectional side-view of a shouldered double-strap joint 40g/53 wherein a welded butt joint 70a or an adhesive butt joint 40a between two armouring wires 18b, 28b comprised in an armouring layer of a first- and a second cable section 10, 20 wherein the armouring wires comprises a main body 18c, 28c and a concentric projection 18d, 28d.

The butt joint is formed between the concentric projections 18d, 28d.

The joint further comprises two individual armouring wires 48b respectively extending across the butt joint and preferably arranged on opposite sides of the butt joint compared to each other thereby forming a sandwich structure.

One of the individual armouring wire may have a length L5 and extends with a length L5a, L5b measured from the centre of the joint, the length L5a and L5b may be equal or different and may be about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm and
a second individual armouring wire may have a length L6 and extends with a length L6a, L6b measured from the centre of the joint, the length L6a and L6b is equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

The individual armouring wires 48b may not extend onto the main body 18c, 28c of the joined armouring wires.

The armouring wires 48b are glued to the butt jointed armouring wire by a structural adhesive 60 thereby reinforcing the butt joint.

If all four sides of the armouring wires are cut away the reinforcement may be either 4 individual armouring wires 48b or
an armouring sheath 58b wrapped around the butt jointed concentric projections 18d, 28d and extending across the butt joint and onto the concentric projections.

The 4 individual armouring wires may have equal or different lengths and may be selected from a length L5 and extends with a length L5a, L5b measured from the centre of the joint, the length L5a and L5b may be equal or different and may be about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm

A shouldered joint is useful if it is important not to increase the cross-sectional area of the power cable at the location of a joint.

Figure 2J illustrates a cross sectional side-view of parts of a shouldered double-strap joint depicted in figure 2I. The drawing illustrates a welded butt joint 70a or an adhesive butt joint 40a between two armouring wires 18b, 28b comprised in an armouring layer of a first- and a second cable section 10, 20 wherein the abutting armouring wires comprises a main body 18c, 28c and a concentric projection 18d, 28d of length L9a, L9b respectively. The butt joint is formed between the concentric projections 18d, 28d. The concentric projections 18d, 28d have a smaller cross-sectional area compared to the main body 18c, 28c.

Figure 2K-2N depicts cross sectional view A-A of armouring wires with different concentric projections. In Figure 2K all the sides a, b, c, d of the main body 18c of the armouring wire 18b are partly cut away. Figure 2L and 2M only two opposing sides a, b or c, d respectively of the armouring wire are partly cut away. Figure 2N illustrates a further example wherein parts of the armouring wire has been cut away on side a, d.

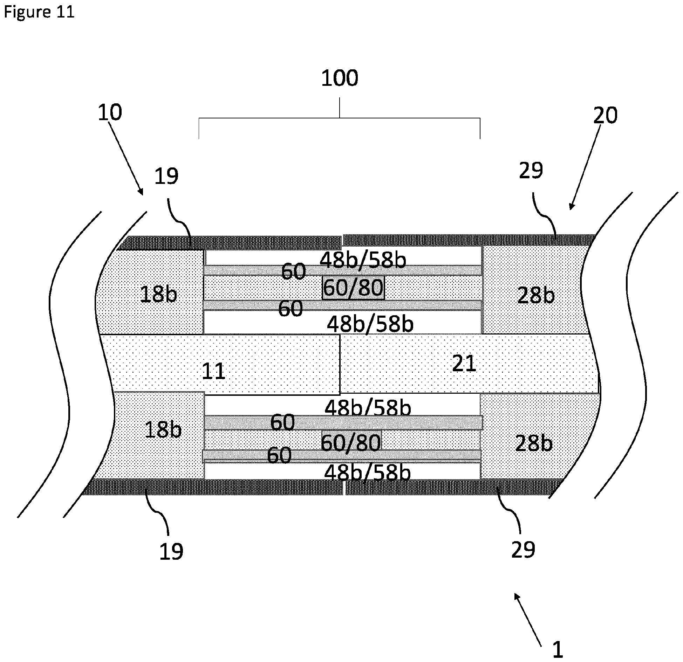

Figure 11 depicts a cross sectional side-view of a joint 100 between two cable sections 10,20 wherein each cable section comprises a core 11,21 and a first armouring layer 18,28 surrounding the core 11,21 and wherein the first armouring layer 18,28 of each cable section 10, 20 comprises armouring wires 18b, 28b arranged in a longitudinal direction of each cable section 10,20 and surrounding the first armouring layer an outer covering sheath 19, 29. The joint between the armouring wires 18b of the first cable section and the armouring wires 28b of the second cable section is a shouldered double strap joint. Further details of this type of joint is illustrated and described in relation to figures 2I to 2N.

**In a second aspect** there is provided a method of joining a first subsea power cable section 10 and a second subsea power cable section 20,
the first cable section 10 comprising at least one core 11 and an armouring layer 18,
the armouring layer 18 comprising a plurality of armouring wires 18b
the second cable section 20 comprising a at least one core 21 and an armouring layer 28, the armouring layer 28 comprising a plurality of armouring wires 28b,
wherein the method comprises the steps of:
   a) joining the at least one core 11,21 of the first- and of the second- cable section 10, 20; and
   b) fixedly connecting at least one of the plurality of armouring wires 18b of the armouring layer 18 of the first cable section 10 to at least one of the plurality of armouring wires 28b of the armouring layer 28 of the second cable section 20 by:
      c1) applying a structural adhesive 60 or
      c2) welding the armouring wires 18b, 28b to each other, forming a welded joint 70 and applying a structural adhesive 60 across the welded joint 70.

The joining of cores 11, 21 is prepared by conventional methods.

The welding process used for obtaining the welding joint may be achieved by any suitable welding process known in the art, such as gas tungsten arc welding (GTAW) also known as tungsten inert gas (TIG) welding or gas metal arc welding (GMAW) such as metal inert gas (MIG) welding. Alternatively, the welding may be friction stir welding.

The structural adhesive, type of armouring wires and different structures of the joint are described in the sections above.

A plurality of individual armouring wires may be fixedly connected in the longitudinal direction by a structural adhesive thereby forming an armouring layer.

The method of preparing an adhesive joint 40 may be a method of preparing an overlapping joint such as a single-lap joint 40c or a double-lap joint 40d.

The method may be preparation of a single-lap joint 40a by applying a structural adhesive layer between overlapping armouring wires thereby forming a sandwich structure at the joint wherein the armouring wires are overlapping each other by a length L7.

The method of c2) the welded joint may be a butt j oint, a bevel butt j oint or a v-joint thereby forming a pair of welded armouring wires.

In one embodiment the method comprises:
- providing at least one individual armouring wire 48b;
- joining at least one individual armouring wire to the pair of welded armouring wires 18b, 28b wherein the individual armouring wire 48b is arranged across the welded joint 70; and
- providing an adhesive layer comprising a structural adhesive 60 between the individual armouring wire 48b and the welded pair of armouring wires 18b, 28b thereby forming a sandwich structure at the joint and wherein the individual armouring wire 48b is arranged in the longitudinal direction of the power cable assembly 1 and extends on each side of the welded joint 70.

In one embodiment the armouring wires comprises a main body 18c, 28c and a concentric projection 18d, 28d respectively, and wherein the concentric projections are prepared by cutting away parts of the armouring wires of length L9a and L9b wherein
- the concentric projection 18d, 28d has a smaller cross-sectional area compared to the main body 18c, 28c and
- the concentric projections are fixedly connected by welding or a structural adhesive.

The length of the concentric projections L9a and L9b may be equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm,

In one embodiment of the second aspect the armouring wires, the individual armouring wires and the armouring sheet at the location of the joint are pre-treated before applying the structural adhesive.

The pre-treatment may be selected from sandblasting and acid wash or a combination.

The structural adhesive 60 may be loaded in shear.

The temperature of the curing of the structural adhesive may vary dependent on the structural adhesive use and the time.

Having generally described this invention, a further understanding can be obtained by reference to the examples. The examples illustrate the properties and effects of jointing ends of armouring wires using adhesives, and are provided herein for purposes of illustration only, and are not intended to be limiting.

### EXAMPLES

### Example 1 - "single overlap test" - testing length of overlap and its effect on the strength of the adhesive joint

Different length of the overlap between steel wires where tested in accordance with the standardized test described in ASTM D1002.

The steel wires used in the experiment was rectangular parallelopiped bars and the structural adhesive used was an epoxy adhesive DP460 from 3M.

The result of the test is depicted in figure 12.

### Example 2 - "single overlap test" - testing curing time of the structural adhesive and its effect on the strength of the adhesive joint

Different length of the cure time of the structural adhesive was tested in accordance with the standardized test described in ASTM D1002.

The joint used in the experiment was a single-lap joint between steel-wires, figure 2E. The steel wires used in the experiment was rectangular parallelopiped bars and the adhesive used in the experiment was DP460 from 3M.

The curing temperature used in this experiment was 60°C and the overlap between the steel wires was 200 mm.

The result of the test is depicted in figure 13.

The results of the experiments shows that the mechanical strength of the adhesive joint is similar to the mechanical strength of a steel wire.

### List of reference signs

1 power cable assembly
10 first power cable section
11, 12, 13 core members of first power cable section
14 conductor of first power cable section
15 insulation layer system of first power cable section
16 semi conducting shield of first power cable section
17 binder layer that holds the cable cores together of first power cable section
18 first armouring layer comprising armouring wires 18b
18b armouring wire
18a a portion of the armouring wire 18b
18c main body of armouring wire 18b
18d concentric projector of armouring wire 18b
19 outer covering sheath for example made of polypropylene
20 second power cable section
21 core member
28 first armouring layer comprising armouring wires 28b
28a a portion of the armouring wire 28b
28b armouring wire
28c main body of armouring wire 28b
28d concentric projector of armouring wire 28b
29 outer covering sheath for example made of polypropylene
40 adhesive joint
40a adhesive butt joint, figure 2a
40b adhesive bevel joint, figure 2b
40c single-overlap joint comprising a structural adhesive 60
40d double-overlap joint comprising a structural adhesive 60
40e simple-strap joint comprising a structural adhesive 60
40f double-strap joint comprising a structural adhesive 60
40g shouldered joint being either a shouldered strap joint comprising at least one individual armouring wire 48b arranged across the joined concentric projectors 18d,
28d of armouring wires 18b, 28b or shouldered joint comprising an armouring sheathing 58b wrapped around the joint and the joined concentric projectors 18d,
28d of armouring wires 18b, 28b
38 second armouring layer of second cable section 20 comprising armouring wires 38b
48b individual armouring wire reinforcing an adhesive joint 40 or welded joint 70 between the armouring wires 18b of the first cable section 10 and the armouring wires 28b of the second cable section 20
51 simple-strap joint comprising a welded joint 70 between an armouring wire 18b of the first cable section 10 and an armouring wire 28 of the second cable section 20, and a structural adhesive 60 joining the individual armouring wire 48b to the welded joint
52 double strap joint comprising a welded joint 70 and two individual armouring wires 48b glued to the welded joint
53 shouldered joint (shouldered strap joint or shouldered sheath joint)
58b armouring sheath
60 structural adhesive
70 welded joint comprising welding material 80
70a welded butt joint comprising welding material 80
70b welded bevel joint comprising welding material 80
70c welded v-joint comprising welding material 80
80 welding material
100 joint

## Claims

1. A subsea power cable assembly (1) comprising a joint (100) between a first- and a second- cable section (10,20), each cable section comprising at least one core member (11, 21) surrounded by at least one armouring layer, wherein the at least one armouring layer (18,28) of each cable section (10, 20) comprises a plurality of armouring wires (18b, 28b) and wherein at least one of the plurality of armouring wires (18b) of the first cable section (10) is fixedly connected to at least one of the plurality of armouring wires (28b) of the second cable section (20) by
a) structural adhesive (60) or
b) a welded joint (70) and a structural adhesive (60) extending across the welded joint.

2. The subsea power cable assembly (1) of claim 1 a), wherein an armouring wire (18b) of the of the first cable section (10) is fixedly connected to an armouring wire (28b) of the second cable section (20) by an adhesive joint (40) comprising a structural adhesive (60).

3. The subsea power cable assembly (1) of claim 2, wherein the adhesive joint (40) is an overlapping joint wherein the overlapping joint is
- a single-lap joint (40c) wherein the armouring wire of the first cable section overlaps the armouring wire of the second cable section and a structural adhesive arranged between the overlapping armouring wires; or
- the overlapping joint is a double overlap joint (40d) wherein the first cable section (10) comprises a first armouring layer (18) comprising a plurality of armouring wires (18b) and the second cable section (20) comprises a first armouring layer (28) comprising a plurality of armouring wires (28b) and a second armouring layer (38) comprising a plurality of armouring wires (38b) and wherein one armouring wire (18a) of the first armouring layer (18) of the first cable section (10) is arranged between an armouring wire (28b) of the first armouring layer (28) of the second cable section (20) and an armouring wire (38b) of the second armouring layer (38) of the second cable section (20) thereby forming a sandwich structure at the joint and a structural adhesive arranged between the overlapping armouring wires

4. The subsea power cable assembly (1) of claim 3, wherein the length of the overlap of the single-overlap joint (L7) and the length of the double-overlap joint (L8) is equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

5. The subsea power cable assembly (1) of claim 2 wherein the joint is a strap-joint (51) comprising at least one individual armouring wire (48b) fixedly connected by the structural adhesive (60) and extending across an adhesive joint (40a, 40b) between the armouring wire (18b, 28b) and onto the armouring wires on each side of the welded joint (70).

6. The subsea power cable assembly (1) of claim 1b) wherein the joint is a strap-joint (51) comprising at least one individual armouring wire (48b) fixedly connected to the structural adhesive (60) and extending across the welded joint (70) between the armouring wire (18b, 28b) and onto the armouring wires on each side of the welded joint (70).

7. The subsea power cable assembly (1) of claim 5 or claim 6, wherein the at least one armouring wire (48b) has a length L2 and extends with a length L2a, L2b measured from the centre of the joint, the length L2a and L2b is equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

8. The subsea power cable assembly (1) of any one of claims 1 to 7, wherein the structural adhesive is selected from a group comprising two component epoxy, a two component toughened methacrylate, cyanoacrylate adhesive, two component acrylic and any combinations thereof.

9. The subsea power cable assembly of any one of claims 1 to 8, wherein the armouring wires are metal wires such as steel wires.

10. The subsea power cable assembly (1) of any one of claims 1 to 9, wherein the armouring wires are rectangular parallelopiped bars arranged in the longitudinal direction of the subsea cable or wounded around the cable core in a helix or spiral pattern.

11. A method of joining a first subsea power cable section (10) and a second subsea power cable section (20),
the first cable section (10) comprising at least one core (11) and an armouring layer (18), the armouring layer (18) comprising a plurality of armouring wires (18b)
the second cable section (20) comprising a at least one core (21) and an armouring layer (28), the armouring layer (28) comprising a plurality of armouring wires (28b), wherein the method comprises the steps of:
a) joining the at least one core (11,21) of the first- and of the second- cable section (10, 20); and
b) fixedly connecting at least one of the plurality of armouring wires (18b) of the armouring layer (18) of the first cable section (10) to at least one of the plurality of armouring wires (28b) of the armouring layer (28) of the second cable section (20) by:
c1) a structural adhesive (60) or
c2) welding the armouring wires (18b, 28b) to each other, forming a welded joint (70) and applying a structural adhesive (60) across the welded joint (70).

12. The method of claim 11 wherein in step c1) the armouring wires (18b, 28b) are fixedly connected by an adhesive joint (40) comprising a structural adhesive (60).

13. The method of claim 11, wherein the adhesive joint (40) is an overlapping joint (40c, 40d) wherein the overlapping joint is a single-lap joint (40c) or a double-lap joint.

14. The method of claim 12 c1) wherein the method comprises:
- providing at least one individual armouring wire (48b);
- joining at least one individual armouring wire (48b) to a pair of adhesively joined (40a, 40b) armouring wires (18b,28b) wherein the at least one individual armouring wire (48b) is arranged across the adhesive joint (70); and
- providing the structural adhesive (60) between the individual armouring wire (48b) and the at least one adhesively joint (40a, 40b) armouring wires (18b, 28b) thereby forming a sandwich structure at the joint and wherein the the at least one individual armouring wire (48b) is arranged in the longitudinal direction of the power cable assembly (1) and extends on each side of the adhesive joint (40a, 40b).

15. The method of claim 11 c1) wherein the method comprises:
- providing at least one individual armouring wire (48b);
- joining at least one individual armouring wire (48b) to the welded armouring wires (18b,28b) wherein the at least one individual armouring wire (48b) is arranged across the welded joint (70); and
- providing the structural adhesive (60) between the at least one individual armouring wire (48b) and the welded armouring wires (18b, 28b) thereby forming a sandwich structure at the joint and wherein the at least one individual armouring wire (48b) is arranged in the longitudinal direction of the power cable assembly (1) and extends on each side of the welded joint (70).

16. The method of wherein the structural adhesive (60) is selected from a group comprising or consisting of two component epoxy, a two component toughened methacrylate, cyanoacrylate adhesive, two component acrylic and any combinations thereof.

17. The method of any one of claims 10 to 16, wherein the armouring wires are metal wires such as steel wires.

18. The method of any one of claims 10 to 17, wherein the armouring (18b, 28b, 48b), are pre-treated before applying the structural adhesive.

19. The method of claim 18 wherein the pre-treatment is selected from sandblasting and acid wash or a combination.

20. The method of any one of claims 10 to 19, wherein the structural adhesive (60) is loaded in shear.

## Amended claims

### Amended claims in accordance with Rule 137(2) EPC.

1. A subsea power cable assembly (1) comprising a joint (100) between a first- and a second- cable section (10,20), each cable section comprising at least one core member (11, 21) surrounded by at least one armouring layer, wherein the at least one armouring layer (18,28) of each cable section (10, 20) comprises a plurality of armouring wires (18b, 28b) and wherein at least one of the plurality of armouring wires (18b) of the first cable section (10) is fixedly connected to at least one of the plurality of armouring wires (28b) of the second cable section (20) by structural adhesive (60).

2. The subsea power cable assembly (1) of claim 1, wherein an armouring wire (18b) of the of the first cable section (10) is fixedly connected to an armouring wire (28b) of the second cable section (20) by an adhesive joint (40) comprising a structural adhesive (60).

3. The subsea power cable assembly (1) of claim 2, wherein the adhesive joint (40) is an overlapping joint wherein the overlapping joint is
- a single-lap joint (40c) wherein the armouring wire of the first cable section overlaps the armouring wire of the second cable section and a structural adhesive arranged between the overlapping armouring wires; or
- the overlapping joint is a double overlap joint (40d) wherein the first cable section (10) comprises a first armouring layer (18) comprising a plurality of armouring wires (18b) and the second cable section (20) comprises a first armouring layer (28) comprising a plurality of armouring wires (28b) and a second armouring layer (38) comprising a plurality of armouring wires (38b) and wherein one armouring wire (18a) of the first armouring layer (18) of the first cable section (10) is arranged between an armouring wire (28b) of the first armouring layer (28) of the second cable section (20) and an armouring wire (38b) of the second armouring layer (38) of the second cable section (20) thereby forming a sandwich structure at the joint and a structural adhesive arranged between the overlapping armouring wires

4. The subsea power cable assembly (1) of claim 3, wherein the length of the overlap of the single-overlap joint (L7) and the length of the double-overlap joint (L8) is equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

5. The subsea power cable assembly (1) of claim 2, wherein the joint is a strap-joint (51) comprising at least one individual armouring wire (48b) fixedly connected by the structural adhesive (60) and extending across an adhesive joint (40a, 40b) between the armouring wire (18b, 28b) and onto the armouring wires on each side of the welded joint (70).

6. The subsea power cable assembly (1) of claim 5, wherein the at least one armouring wire (48b) has a length L2 and extends with a length L2a, L2b measured from the centre of the joint, the length L2a and L2b is equal or different and is about 200 cm, such as from 5cm to 150cm, such as from 10cm to 100cm, such as from 10cm to 90cm, such as from 10cm to 80cm, such as from 10cm to 75cm, such as from 20cm to 75cm, such as from 30cm to 75cm.

7. The subsea power cable assembly (1) of any one of claims 1 to 6, wherein the structural adhesive is selected from a group comprising two component epoxy, a two component toughened methacrylate, cyanoacrylate adhesive, two component acrylic and any combinations thereof.

8. The subsea power cable assembly of any one of claims 1 to 7, wherein the armouring wires are metal wires such as steel wires.

9. The subsea power cable assembly (1) of any one of claims 1 to 8, wherein the armouring wires are rectangular parallelopiped bars arranged in the longitudinal direction of the subsea cable or wounded around the cable core in a helix or spiral pattern.

10. A method of joining a first subsea power cable section (10) and a second subsea power cable section (20),
the first cable section (10) comprising at least one core (11) and an armouring layer (18), the armouring layer (18) comprising a plurality of armouring wires (18b),
the second cable section (20) comprising a at least one core (21) and an armouring layer (28), the armouring layer (28) comprising a plurality of armouring wires (28b), wherein the method comprises the steps of:
a) joining the at least one core (11,21) of the first- and of the second- cable section (10, 20); and
b) fixedly connecting at least one of the plurality of armouring wires (18b) of the armouring layer (18) of the first cable section (10) to at least one of the plurality of armouring wires (28b) of the armouring layer (28) of the second cable section (20) by:

11. c1) a structural adhesive (60). The method of claim 10 wherein in step c1) the armouring wires (18b, 28b) are fixedly connected by an adhesive joint (40) comprising a structural adhesive (60).

12. The method of claim 10, wherein the adhesive joint (40) is an overlapping joint (40c, 40d) wherein the overlapping joint is a single-lap joint (40c) or a double-lap joint.

13. The method of claim 11 wherein the method comprises:
- providing at least one individual armouring wire (48b);
- joining at least one individual armouring wire (48b) to a pair of adhesively joined (40a, 40b) armouring wires (18b,28b) wherein the at least one individual armouring wire (48b) is arranged across the adhesive joint (70); and
- providing the structural adhesive (60) between the individual armouring wire (48b) and the at least one adhesively joint (40a, 40b) armouring wires (18b, 28b) thereby forming a sandwich structure at the joint and wherein the at least one individual armouring wire (48b) is arranged in the longitudinal direction of the power cable assembly (1) and extends on each side of the adhesive joint (40a, 40b).

14. The method of claim 10 wherein the method comprises:
- providing at least one individual armouring wire (48b);
- joining at least one individual armouring wire (48b) to the welded armouring wires (18b,28b) wherein the at least one individual armouring wire (48b) is arranged across the welded joint (70); and
- providing the structural adhesive (60) between the at least one individual armouring wire (48b) and the welded armouring wires (18b, 28b) thereby forming a sandwich structure at the joint and wherein the at least one individual armouring wire (48b) is arranged in the longitudinal direction of the power cable assembly (1) and extends on each side of the welded joint (70).

15. The method of claim 10, wherein the structural adhesive (60) is selected from a group comprising or consisting of two component epoxy, a two component toughened methacrylate, cyanoacrylate adhesive, two component acrylic and any combinations thereof.

16. The method of any one of claims 10 to 15, wherein the armouring wires are metal wires such as steel wires.

17. The method of any one of claims 10 to 16, wherein the armouring (18b, 28b, 48b), are pre-treated before applying the structural adhesive.

18. The method of claim 17, wherein the pre-treatment is selected from sandblasting and acid wash or a combination.

19. The method of any one of claims 10 to 18, wherein the structural adhesive (60) is loaded in shear.
